# EUROPÄISCHE PATENTSCHRIFT

(11) **EP 1 898 829 B1**
(45) Veröffentlichungstag und Bekanntmachung des Hinweises auf die Patenterteilung: **03.09.2014**
(21) Anmeldenummer: 06755180.4
(22) Anmeldetag: 15.05.2006
(51) Int. Cl.: A61C 13/08, A61C 5/10, A61C 13/09, A61C 13/083, A61C 13/00

(54) **VERFAHREN ZUR HERSTELLUNG EINES ZAHNERSATZTEILS**
METHOD FOR PRODUCTION OF A TOOTH REPLACEMENT PIECE
PROCEDE POUR REALISER UN ELEMENT DE PROTHESE DENTAIRE

(30) Priorität: 13.05.2005 DE 102005023105; 17.08.2005 US 205019
(43) Veröffentlichungstag der Anmeldung: 19.03.2008
(73) Patentinhaber: Sirona Dental Systems GmbH, 64625 Bensheim (DE); VITA-ZAHNFABRIK H. Rauter GmbH & Co. KG, 79713 Bad Säckingen (DE)
(72) Erfinder: PFEIFFER, Joachim, 64625 Bensheim (DE); SCHNEIDER, Wilhelm, 64689 Grasellenbach (DE); THIEL, Norbert, 79713 Bad Säckingen (DE)
(74) Vertreter: Sommer, Peter
(86) Internationale Anmeldenummer: PCT/EP2006/062302
(87) Internationale Veröffentlichungsnummer: WO 2006/120254

(56) Entgegenhaltungen:
- EP-A- 1 614 396
- WO-A-01/13862
- WO-A-02/45614
- WO-A-99/13796
- US-A- 4 650 418
- US-A- 5 118 296
- US-A- 5 151 044
- US-A1- 2004 096 805
- US-A1- 2004 161 726

## Beschreibung

### Technisches Gebiet

Die Erfindung betrifft ein Verfahren zur Herstellung eines Zahnersatzteils, wobei das Zahnersatzteil mit einer inneren Oberfläche auf einem weiteren Zahnersatzteil befestigt wird. Dabei handelt es sich insbesondere um die Herstellung von Zahnersatzteilen unter Verwendung von CAD/CAM.

### Stand der Technik

In der klassischen Zahntechnik werden Kronen und Brücken hergestellt, indem ein Gerüst erzeugt wird, das anschließend verblendet wird. Durch die Verblendung lässt sich auch ein ästhetisch hochwertiges Ergebnis erzielen. Dabei kann die Herstellung des Gerüsts durch CAD/CAM-Verfahren erfolgen, die Verblendung erfolgt aber manuell.

Weiterhin ist es bekannt, Kronen aus homogenen Rohlingen mittels CAD/CAM-Verfahren herzustellen. Hier ist zwar durch Auswahl der Farbe des Rohlings eine gewisse ästhetische Anpassung möglich, ein optimales ästhetisches Resultat lässt sich jedoch nicht erreichen. Auch mit Rohlingen, die einen Farbverlauf beinhalten, wird zwar die Farbgebung der einteilig ausgeschliffenen Krone etwas verbessert, eine individuelle Anpassung ist hier jedoch ebenfalls nicht möglich.

Darüber hinaus ist es bekannt, auf ein Gerüst verschiedene Materialien mit unterschiedlichen optischen Eigenschaften automatisch aufzutragen, um das gewünschte ästhetische Erscheinungsbild und die aus einem CAD-Datensatz vorbestimmte Form zu erzeugen. Hierzu offenbart die EP 1 400 232 A1, dass zur Herstellung eines ästhetisch natürlich wirkenden-Zahnersatzteils mehrere Schichten übereinander aufgetragen werden, wobei die untersten Schichten undurchsichtig sind und wenigstens eine der untersten Schichten fluoreszierend ist, wohingegen die Deckschichten vorwiegend transparent und schillernd sind.

Aus der DE 101 45 104 A1 ist die Herstellung von Zahnersatz aus einem dreidimensional vermessenen und digitalisierten Modell bekannt, bei dem die Innenfläche des Oberflächenmodells mit einem vorgegebenen Offsetwert zur Bildung eines Zementspaltes beaufschlagt wird.

Aus der DE 198 53 949 C2 ist eine keramische Zahnrestauration bekannt, bei der ein Verbindungsglied in zwei benachbarte Kronen- oder Brückenelemente einsteckbar ist und über eine Glaspulverpaste-Aufschlemmung eingesintert wird.

Aus der US 5,162,130 A ist ein Verfahren zur farblichen Gestaltung einer Zahnrestauration bekannt, bei dem ein Fotoaktivierbares Material eingesetzt wird.

Aus der US 4,877,402 ist ein Verfahren zur Herstellung eines Zahnersatzteils und ein Zahnersatzteil bekannt, bei dem eine farbgebende Komponente auf die Innenfläche des äußeren Bauteils aufgetragen wird oder bei dem der Zement entsprechend eingefärbt wird.

US 5 118 296 und US 2004/0 161 726 sind auch relevante Dokumente aus dem Stand der Technik.

Das der Erfindung zugrunde liegende Problem besteht darin, auch bei durch Ausschleifen hergestellten Bauteilen eines Zahnersatzes ein Verfahren zur Herstellung eines Zahnersatzteils bereitzustellen, das hinsichtlich der Ästhetik dem klassischen, schichtweisen Verblenden, wie es in der Zahntechnik praktiziert wird, ebenbürtig ist.

### Darstellung der Erfindung

Dieses Problem wird mit der in dem unabhängigen Anspruch 1 beschriebenen Erfindung gelöst. In den Unteransprüchen sind vorteilhafte Weiterbildungen angegeben.

Bei dem Verfahren zur Herstellung eines Zahnersatzteils, das beispielsweise auf einem weiteren Zahnersatzteil mittels eines Klebstoffs befestigt werden soll, wird ein sich zwischen der inneren Oberfläche des Zahnersatzteils und dem weiteren Zahnersatzteil befindlicher Spalt vorgesehen, wobei die innere Oberfläche des Zahnersatzteils unter Berücksichtigung der optischen Eigenschaften des Klebstoffs konstruiert wird.

Eine Aufteilung eines vollständigen Zahnersatzteils, beispielsweise einer Krone, in mehrere Bauteile, wobei eines der Bauteile nach dem vorbeschriebenen Verfahren gefertigt wird, hat den Vorteil, dass man die Einzelteile gemäß der entsprechenden Anforderungen gestalten kann. An den Kern eines vollständigen Zahnersatzteils werden hohe Anforderungen im Hinblick auf Festigkeit und Biokompatibilität gestellt, wohingegen für den sichtbaren Teil des Zahnersatzteils die optischen, haptischen und abrasiven Eigenschaften überwiegen.

Durch eine Aufteilung des Zahnersatzteils in mehrere Bauteile ist es weiterhin möglich, während der Konstruktion einen in der Dicke veränderbaren Spalt zwischen den Bauteilen zu erzeugen, so dass beim Verkleben der Bauteile aneinander die Dicke der Klebeschicht angepasst ist.

Im Fall der Herstellung einer Krone aus einem Gerüstteil und einem äußeren Teil und deren nachträglicher Verklebung durch einen eingefärbten Klebstoff lässt sich eine farbliche Anpassung erreichen, wenn das äußere Teil ähnlich wie der Zahnschmelz transluzent ist. Die unter dem äußeren Teil liegende farbige Schicht schimmert somit durch und erzeugt die gewünschte Farbwirkung, die einem natürlichen Zahn ähnlich ist.

Die Dicke der Klebeschicht ist so bestimmt, dass die gewünschte Farbintensität und/oder Farbgebung erreicht wird, da diese von der Dicke der Klebeschicht abhängen. Wird eine dicke Klebeschicht verwendet, so ist der optische Eindruck in der Regel dunkler als bei einer dünneren Klebeschicht.

Dabei kann die Dicke der Klebeschicht entlang der Trennfläche zwischen zwei Bauteilen total unterschiedlich sein. Der natürliche Zahn ist im unteren Bereich meist dunkler als im oberen Bereich. Daher wird typischerweise die Klebstoffschicht im unteren Bereich des Zahnersatzteils dicker vorgesehen.

Gemäß einer Weiterbildung lässt sich die Farbgebung und/oder Farbintensität der eingefärbten Klebstoffschicht nach dem Verbinden der Bauteile und nach dem Herstellen der Klebeverbindung beeinflussen.

Vorteilhafterweise erfolgt die Beeinflussung der Farbgebung und/oder Farbintensität der Klebeschicht durch Bestrahlung mit Licht, insbesondere mit Licht einer Wellenlänge außerhalb des sichtbaren Bereichs. Dadurch lässt sich die Farbe des Zahnersatzteils an die vorhandenen Zähne anpassen.

Für die Positionierung der einzelnen Bauteile zueinander und die Herstellung der Klebeschicht mit den gewünschten farblichen Eigenschaften ist es vorteilhaft, wenn an zumindest einem der Bauteile Anlageflächen vorgegehen sind, welche auf Vorsprüngen angeordnet sind und einen Abstandshalter bilden. Diese Abstandshalter werden vorteilhafterweise in wenig oder nicht sichtbaren Bereichen angeordnet.

Durch den Abstandshalter wird ein Spalt mit vorgegebener Dicke begrenzt. In diesem Spalt ist die Klebeschicht angeordnet.

Vorteilhafterweise können zur Orientierung eines Bauteils an dem anderen Bauteil Passflächen vorgesehen sein, die eine genaue und eindeutige Ausrichtung der Bauteile zueinander ermöglichen.

Weiterhin kann die Aufspaltung des herzustellenden Zahnersatzteils durch ein CAD-Programm automatisch vorgeschlagen werden. Durch den Einsatz von CAD-Verfahren für die Konstruktion des Zahnersatzteils ist es möglich, die Trennfläche der mindestens zwei Bauteile des Zahnersatzteils von der Software auswählen zu lassen, wobei sowohl Mindestmaße als auch der Verlauf von Anschlusskonturen berücksichtigt werden und eine Trennfuge zwischen den Bauteilen vorgesehen werden kann, deren Dicke nach ästhetischen Gesichtspunkten variiert wird. Dabei können beide Teile aus den für den Zweck am besten geeigneten Materialien bestehen.

Zur Vereinfachung der Herstellung ist es vorteilhaft, einen einzigen Block zu verwenden, in dem mehrere verwendete Materialtypen kombiniert sind, so dass in einem Fräsvorgang ohne zwischenzeitliche Bedienung beide benötigten Teile erstellt werden können.

Ein Zahnersatzteil zur Befestigung auf einem Zahnstumpf oder einem weiteren Zahnersatzteil kann beispielsweise eine sichtbare Außenfläche und eine zur Befestigung mit einem Klebstoff versehbare innere Oberfläche aufweisen, wobei die innere Oberfläche zur Befestigung des Zahnersatzteils so gestaltet ist, dass ein Spalt zum Aufbringen des Klebstoffs zwischen der inneren Oberfläche des Zahnersatzteils und dem Zahnstumpf oder dem weiteren Zahnersatzteil vorhanden ist. Die innere Oberfläche des Zahnersatzteils ist dabei unter Berücksichtigung der optischen Eigenschaften des Klebstoffs gestaltet.

Die innere Oberfläche des Zahnersatzteils kann so gestaltet sein, dass eine von einem gewünschten Erscheinungsbild abhängende Spaltdicke zwischen der inneren Oberfläche des Zahnersatzteils und dem Zahnstumpf oder dem weiteren Zahnersatzteil vorhanden ist. Dies ermöglicht eine Beeinflussung des Erscheinungsbildes auch bei vorgegebenen äußeren Abmaßen.

Das Zahnersatzteil kann transluzent und der Klebstoff durch das Zahnersatzteil hindurch optisch wahrnehmbar sein. Dadurch ist die Beeinflussung der optischen Eigenschaften besonders leicht zu bewerkstelligen.

Das Zahnersatzteil kann zur Ausrichtung auf dem Zahnstumpf oder dem weiteren Zahnersatzteil mindestens einen Abstandhalter aufweisen. Damit lässt sich das Zahnersatzteil besonders leicht auf dem weiteren Zahnersatzteil oder auf einem Zahnstumpf positionieren und die gewünschte Schichtdicke des Klebstoffes besonders gut einstellen.

An dem Zahnersatzteil können Passflächen vorgesehen sein, die zur Orientierung des Zahnersatzteils an dem Zahnstumpf oder dem weiteren Zahnersatzteil dienen und damit eine genaue und eindeutige Ausrichtung des Zahnersatzteils ermöglichen. Dies erhöht die Positioniergenauigkeit weiter.

Ein Rohling zur Herstellung eines aus mehreren Bauteilen zusammengesetzten Zahnersatzteils, das mittels materialabtragender Bearbeitungsverfahren aus dem Rohling herausgearbeitet werden soll, kann aus einem ersten Teil aus einem ersten Material für das erste Zahnersatzteil und einem zweiten Teil aus einem zweiten Material für das weitere Zahnersatzteil bestehen. Dies ermöglicht die gleichzeitige sequentielle Fertigung beider Zahnersatzteile in einem Durchgang in derselben Bearbeitungsmaschine.

Als Material für das weitere Zahnersatzteil kann Al₂O₃ oder ZrO und als Material für das Zahnersatzteil Feldspat-Keramik vorgesehen werden. Beide Materialien eignen sich in besonderem Maße für die jeweiligen Anwendungszwecke.

Der Teil des Rohlings für die Herstellung des Zahnersatzteils kann Bereiche unterschiedlicher Farbgebung aufweisen. Damit lässt sich eine Reduktion der zur Erzeugung einer ästhetischen Oberfläche notwendigen Schichtdicke des Klebstoffs erreichen. In einer Weiterbildung kann der Rohling ein Halteteil und einen Rohlingskörper aufweisen. Der erste und zweite Teilbereich liegen nebeneinander und an dem einen Teilbereich ist das Halteteil angeordnet.

### Kurzbeschreibung der Zeichnung

In der Zeichnung sind Ausführungsbeispiele der Erfindung dargestellt. Es zeigt die:
- Fig. 1: ein Zahnersatzteil mit einer Brücke und einer Verblendung, die
- Fig. 2: ein Detail aus Fig. 1 im Bereich einer innenliegenden Trennfläche, die
- Fig. 3: ein weiteres Zahnersatzteil, die
- Fig. 4: einen Rohling mit unterschiedlichen Materialeigenschaften zur Herstellung der Bauteile eines Zahnersatzteils und die
- Fig. 5: A-C einen Ausschnitt aus dem Zahnersatzteil aus Fig. 1 mit jeweils unterschiedlicher Gestaltung des Randbereichs.

### Ausführungsbeispiele der Erfindung

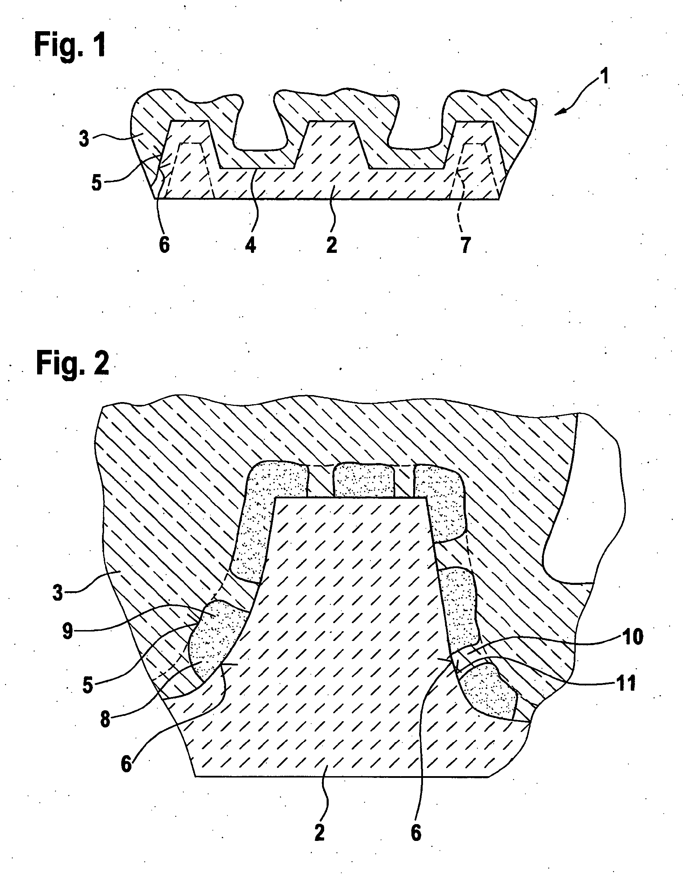

In Fig. 1 ist ein herzustellendes vollständiges Zahnersatzteil 1 in Form einer Brücke gezeigt, welches aus einem weiteren Zahnersatzteil in Form eines Gerüsts 2 und einem Zahnersatzteil in Form einer Verblendung 3 aufgebaut ist. Zwischen der Verblendung 3 und dem Gerüst 2 ist eine Trennfläche 4 vorhanden, welche von der inneren Oberfläche 5 der Verblendung 3 einerseits und der äußeren Oberfläche 6 des Gerüsts 2 andererseits gebildet ist. Der Verlauf der Trennfläche 4 wird vorzugsweise durch ein CAD-Programm automatisch unter Berücksichtigung der erforderlichen Konstruktionsparameter festgelegt.

Die Verblendung 3 ist aus einem Material gefertigt, die transluzent ist und unter der Verblendung 3 liegende Schichten durchscheinen lässt.

Das Gerüst 2 kann seinerseits eine innere Oberfläche 7 aufweisen zur Befestigung an einem nicht dargestellten Abutment oder einem nicht dargestellten Zahnrest.

In **Fig. 2** ist der Verlauf der Trennfläche im Detail dargestellt, wobei hier zwischen der inneren Oberfläche 5 der Verblendung 3 und der äußeren Oberfläche 6 des Gerüsts 2 ein Spalt 8 vorgesehen ist, welcher mit Klebstoff 9 gefüllt ist.

Um eine definierte Schichtdicke der Klebeschicht zu erreichen, ist in dem Spalt 8 ein Vorsprung 10 angeordnet, der mit einer Anlagefläche 11 an der äußeren Oberfläche 6 aufliegt.

Der Klebstoff 9 ist eingefärbt und weist eine Farbintensität und/oder eine Farbgebung auf, die von der Dicke der Klebeschicht abhängt. Wenn die Schichtdicke zunimmt, nimmt die Farbintensität zu und die Klebeschicht erscheint dunkler. Bei abnehmender Schichtdicke nimmt die Farbintensität ab und die Klebeschicht erscheint heller.

Selbstverständlich kann der Klebstoff 9 selbst in unterschiedlichen Grundfarben vorliegen und in geeigneter Weise ausgewählt werden, um nach Einbringen in den Spalt die gewünschten Färbeffekte zu erzielen. Die sich im Klebstoff 9 befindlichen Farben scheinen durch die transluzente Verblendung 3 durch.

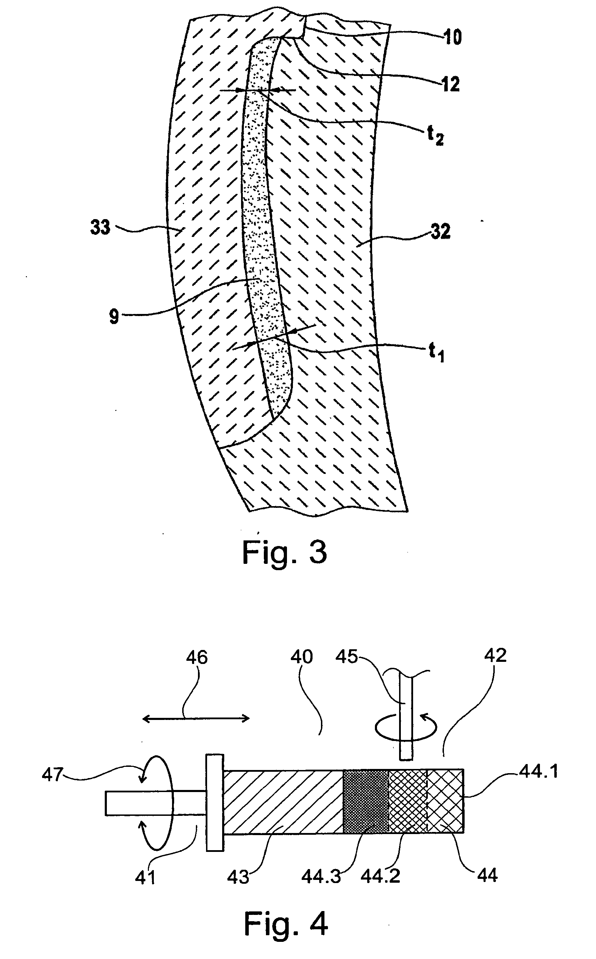

In **Fig. 3** ist eine Zahnrestauration gezeigt, bei der ein Außenteil 33 auf ein Innenteil 32 aufgesetzt ist. Dabei ist ein Spalt 8 mit einer Klebeschicht 9 ausgefüllt, deren Dicke t₁ in einem unteren Bereich größer ist als die Dicke t₂ in einem oberen Bereich.

Über ein Abstandselement 10 am Außenteil 33, welches in eine entsprechende Ausnehmung 12 am Innenteil 32 eingreift, wird das Außenteil am Innenteil platziert und der vorgegebene Abstand eingestellt.

In **Fig. 4** ist ein Rohling für die Herstellung eines aus mehreren Bauteilen bestehenden Zahnersatzteils dargestellt, wobei der Rohling 40 aus einem Hälteteile 41 und einem damit verbundenem Rohlingskörper 42 besteht.

Der Rohlingskörper 42 hat zwei nebeneinanderliegende Teilbereiche 43, 44, die eine unterschiedliche Materialzusammensetzung aufweisen wobei der Teilbereich 43 zwischen dem Halteteil 41 und dem Teilbereich 44 angeordnet ist. Der Unterschied der Materialzusammensetzung kann sowohl in den optischen Eigenschaften, beispielsweise der Farbe oder der Transluzenz, als auch in den Festigkeitswerten liegen, so dass ein Bauteil eines mehrteiligen Zahnersatzteils aus dem einen Material und ein anderes Bauteil aus dem anderen Material des Teilbereichs 44 in einer einzigen Aufspannung ohne Wechsel des Werkstücks hergestellt werden kann. Dazu kann der Rohling 40 an einem Werkzeug 45 in Richtung der Pfeile 46, 47 entlang bewegt werden.

Der Teil 44 für die Herstellung des zweiten Bauteils 3 weist Bereiche 44.1 - 44.3 unterschiedlicher Farbgebung auf.

Grundsätzlich kann auch bei der Anbringung eines einteiligen Zahnersatzteils, beispielsweise eines Veneers an einem restaurierten Zahn der erfindungsgemäße Vorteil erreicht werden, in dem eine farblich abgestimmte Klebeschicht zur Anwendung gelangt. Das Zahnersatzteil kann dafür ebenfalls an der Trennstelle mit einem Spalt versehen sein, in den Abstandserhalter hineinragen. Die Dicke des Spalts und damit der Klebeschicht kann von der Konstruktionssoftware entsprechend dem gewünschten Farbverlauf angepasst sein, so dass bei der Anbringung des Zahnersatzteils der Klebstoff zunächst in ausreichendem Maße aufgetragen wird. Beim Andrücken des Zahnersatzteils an den Zahnstumpf wird der überschüssige Klebstoff aus der Trennfuge herausgedrückt und kann entfernt werden. Beim Andrücken ist dann dafür Sorge zu tragen, dass die Anschlagsposition auch tatsächlich erreicht wird, so dass die vorgegebene Dicke der Klebstoffschicht auch erreicht und nicht überschritten wird.

Der Klebstoff kann prinzipiell organisch oder anorganisch sein. Bei einem anorganischen Klebstoff kommt als Material beispielsweise eingefärbtes Glaslot in Frage.

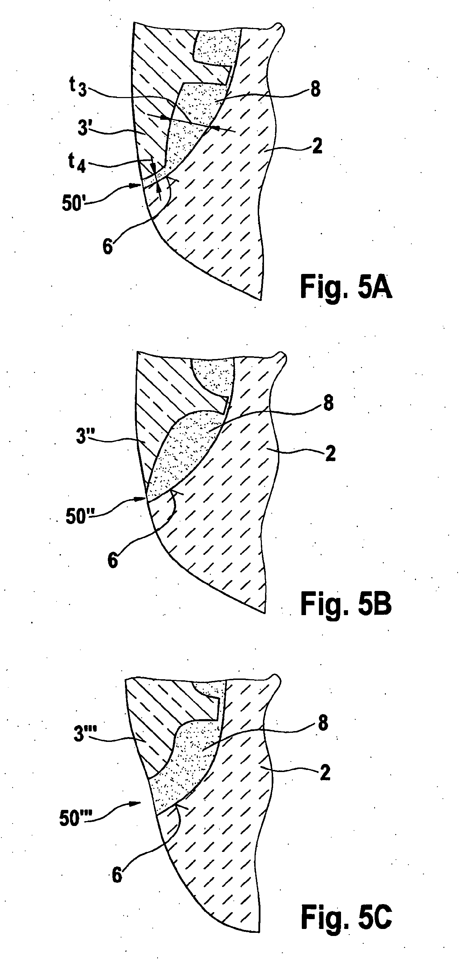

Die **Fig. 5 A-C** zeigen verschiedene Möglichkeiten zur Gestaltung des Überganges 50', 50", 50''' zwischen der Verblendung 3', 3", 3"' und dem Gerüst 2. Ein solcher Übergang 50', 50", 50"' muss mehrere Anforderungen erfüllen.

Erstens muss er glatt sein, damit es keine Verletzungsgefahr gibt oder damit sich keine Feuchtigkeit und/oder schädliche Mikroorganismen darin festsetzen können. Zweitens muss er im Frontzahnbereich möglichst unsichtbar sein, um das ästhetische Gesamtbild nicht zu stören. Dies erfordert vor allem ein gleichmäßiges Durchscheinen der innen liegenden Klebstoffschicht 9, was einerseits von der Dicke der Verblendung 3', 3'' , 3''' und andererseits von der Dicke der Klebstoffschicht im Randbereich abhängt. Darüber hinaus muss das vollständige Zahnersatzteil auch im Bereich des Übergangs 50', 50'', 50''' voll belastbar sein.

Dazu ist es nun möglich, den Übergang 50' wie in Fig. 5A dargestellt als stumpf auslaufenden Übergang 50' auszubilden.

Der stumpf auslaufende Übergang 50' ist bis zum äußeren, sichtbaren Rand der Verblendung 3' mit einer dünnen Klebstoffschicht gefüllt. Die Schichtdicke t₄, üblicherweise zwischen 1 und 10 µm, ist dabei in etwa eine Größenordnung kleiner als die durchschnittliche Schichtdicke der Klebstoffschicht t₃ im übrigen Bereich zwischen der Innenseite der Verblendung 3' und der äußeren Oberfläche des Gerüsts. Aufgrund dieser geringen Dicke t₄ ist die Klebstoffschicht 9 nach außen nur sehr schwach wahrnehmbar, wodurch sehr gute optische Eigenschaften erreicht werden. Darüber hinaus ist es bei dieser Form des Übergangs möglich, die Schichtdicke t₃ der Klebstoffschicht 9 bis hinunter zum Bereich des Übergangs 50' relativ konstant zu halten, was einen homogenen Farbverlauf ermöglicht. Die bis zum Außenbereich der Verblendung 3' reichende Klebstoffschicht sorgt darüber hinaus für eine Abdichtung der Verblendung 3'. Es werden somit sehr gute hygienische Eigenschaften erreicht.

Der Vorteil eines Übergangs 50'' mit einer dünn auslaufenden Berandung der Verblendung 3'', wie er in Fig. 5B gezeigt ist, ist, dass hier unter Beibehaltung guter optischer Eigenschaften auch gleichzeitig eine hohe Dichtigkeit erreicht wird.

Alternativ kann der Übergang 50''' wie in Fig. 5C dargestellt gestaltet werden. Dabei wird eine konstante Dicke des Klebstoffs 9 bis zum Rand beibehalten. Der Vorteil dieses Übergangs 50''' ist, dass dieser einerseits sehr glatt und andererseits sehr dicht ist.

## Patentansprüche

1. Verfahren zur Herstellung eines Zahnersatzteils (3), wobei das Zahnersatzteil (3) mit einer inneren Oberfläche (5) mittels einem Klebstoff (9) an einem weiteren Zahnersatzteil (2) befestigt wird, wobei für den Klebstoff (9) ein sich zwischen einer inneren Oberfläche des Zahnersatzteils (3) und dem weiteren Zahnersatzteil (2) befindlicher Spalt (8) vorgesehen wird, **dadurch gekennzeichnet, dass** die innere Oberfläche (5) des Zahnersatzteils (3) unter Berücksichtigung der optischen Eigenschaften des Klebstoffs (9) konstruiert wird, wobei bei der Konstruktion des Zahnersatzteils (3) mittels einer Konstruktionssoftware unter Berücksichtigung der äußeren Oberfläche und der inneren Oberfläche (5) des herzustellenden Zahnersatzteils (3) die Dicke (t) des Spalts (8) so bestimmt ist, dass bei der Einbringung eines mit Farbstoffen versehenen Klebstoffs (9) in den Spalt (8) ein vorbestimmter Farbverlauf hergestellt ist.

2. Verfahren nach Anspruch 1, **dadurch gekennzeichnet, dass** die Dicke des Spalts (8) so bemessen wird, dass bei der Verwendung eines farbigen Klebstoffs (9) eine gewünschte Farbintensität und/oder Farbgebung nach außen hin erreicht wird.

3. Verfahren nach einem der Ansprüche 1 oder 2, **dadurch gekennzeichnet, dass** die Farbgebung und/oder die Farbintensität des Klebstoffs (9) nach dem Verbinden des Zahnersatzteils (3) mit dem weiteren Zahnersatzteil (2) und nach dem Herstellen der Klebeverbindung beeinflussbar ist.

4. Verfahren nach Anspruch 3, **dadurch gekennzeichnet, dass** die Beeinflussung der Farbgebung und/oder der Farbintensität des Klebestoffs (9) durch Bestrahlung mit Licht erfolgt.

5. Verfahren nach Anspruch 4, **dadurch gekennzeichnet, dass** das Licht eine Wellenlänge außerhalb des sichtbaren Bereichs aufweist.

6. Verfahren nach Anspruch 1, **dadurch gekennzeichnet, dass** die Dicke (t₁, t₂) der Schicht des Klebstoffs (9) bei der Konstruktion des Zahnersatzteils (3) im Bereich der inneren Oberfläche (5) des Zahnersatzteils (3) veränderbar ist.

7. Verfahren nach einem der Ansprüche 1 bis 6, **dadurch gekennzeichnet**, die Dicke der Schicht des Klebstoffs (9) lokal unterschiedlich ist.

8. Verfahren nach einem der Ansprüche 1 bis 7, **dadurch gekennzeichnet, dass** das Zahnersatzteil (3) unter Verwendung mindestens eines Abstandhalters (10) an dem weiteren Zahnersatzteil (2) ausgerichtet wird.

9. Verfahren nach Anspruch 8, **dadurch gekennzeichnet, dass** der Abstandshalter (10) Teil der inneren Oberfläche (5) des Zahnersatzteils (3) ist.

10. Verfahren nach Anspruch 8 oder 9, **dadurch gekennzeichnet, dass** der Abstandshalter (10) in nicht sichtbaren Bereichen angeordnet ist.

11. Verfahren nach einem der Ansprüche 1 bis 10, **dadurch gekennzeichnet, dass** an dem Zahnersatzteil (3) Passflächen (12) vorgesehen sind, die zur Orientierung des Zahnersatzteils (3) an dem weiteren Zahnersatzteil (2) dienen, um eine genaue und eindeutige Ausrichtung des Zahnersatzteils (3) zu ermöglichen.

## Claims

1. A method for manufacturing a dental prosthesis (3), the dental prosthesis (3) being secured by an inner surface (5) to a further dental prosthesis (2) by means of an adhesive (9), with a gap (8) for the adhesive (9) being provided between an inner surface of the dental prosthesis (3) and the further dental prosthesis (2), **characterized in that** the inner surface (5) of the dental prosthesis (3) is designed factoring in the visual characteristics of the adhesive (9), wherein while designing dental prosthesis (3) using a design software factoring in the exterior surface and the interior surface (5) of the dental prosthesis (3) to be constructed, the thickness (t) of the gap (8) is defined such that a predefined color gradient is created upon introducing into the gap (8) an adhesive (9) provided with colorants.

2. The method as claimed in claim 1, **characterized in that** the thickness of the gap (8) is dimensioned such that when a colored adhesive (9) is used, a desired color intensity and/or coloring is achieved to the outside.

3. The method as claimed in claim 1 or 2, **characterized in that** the coloring and/or the color intensity of the adhesive (9) can be influenced after connecting the dental prosthesis (3) to the further dental prosthesis (2) and after creating the adhesive bond.

4. The method as claimed in claim 3, **characterized in that** the coloring and/or the color intensity of the adhesive (9) are influenced by irradiation with light.

5. The method as claimed in claim 4, **characterized in that** the light has a wavelength outside the visible range.

6. The method as claimed in claim 1, **characterized in that** the thickness (t₁, t₂) of the layer of adhesive (9) can be varied in the area of the interior surface (5) of the dental prosthesis (3) when designing the dental prosthesis (3).

7. The method as claimed in one of the claims 1 through 6, **characterized in that** the thickness of the adhesive (9) is variable locally.

8. The method as claimed in one of the claims 1 through 7, **characterized in that** the dental prosthesis (3) is aligned with the further dental prosthesis (2) using at least one spacer (10).

9. The method as claimed in claim 8, **characterized in that** the spacer (10) is part of the interior surface (5) of the dental prosthesis (3).

10. The method as claimed in claim 8 or 9, **characterized in that** the spacer (10) is arranged in areas that are not visible.

11. The method as claimed in one of the claims 1 through 10, **characterized in that** mating surfaces (12) are provided on the dental prosthesis (3) and function to orient the dental prosthesis (3) with the further dental prosthesis (2) to facilitate a precise and definitive alignment of the dental prosthesis (3).

## Revendications

1. Procédé de production d'un élément de prothèse dentaire (3), dans lequel l'élément de prothèse dentaire (3) est fixé par une surface intérieure (5) à un autre élément de prothèse dentaire (2) au moyen d'un adhésif (9), dans lequel un espacement (8) entre une surface intérieure de l'élément de prothèse dentaire (3) et l'autre élément de prothèse dentaire (2) est prévu pour recevoir l'adhésif (9), **caractérisé en ce que** la surface intérieure (5) de l'élément de prothèse dentaire (3) est réalisée en tenant compte des propriétés optiques de l'adhésif (9), dans lequel, lors de la création de l'élément de prothèse dentaire (3) au moyen d'un logiciel adapté, en tenant compte de la surface extérieure et de la surface intérieure (5) de l'élément de prothèse dentaire (3) à fabriquer, l'épaisseur (t) de l'espacement (8) est déterminée de manière à ce que, lors de l'introduction d'un adhésif (9) doté d'un colorant dans l'espacement (8), un déroulement de couleur prédéfini est produit.

2. Procédé selon la revendication 1, **caractérisé en ce que** l'épaisseur de l'espacement (8) est calculée de sorte que, lors de l'utilisation d'un adhésif coloré (9), une coloration et/ou une intensité de couleur souhaitée est obtenue de l'extérieur vers l'intérieur.

3. Procédé selon l'une des revendications 1 ou 2, **caractérisé en ce que** l'intensité de couleur et/ou la coloration de l'adhésif (9) peut varier après l'assemblage de l'élément de prothèse dentaire (3) avec l'autre élément de prothèse dentaire (2) et après la réalisation de l'assemblage par adhésif.

4. Procédé selon la revendication 3, **caractérisé en ce que** le changement de coloration et/ou d'intensité de couleur de l'adhésif (9) a lieu suite à une exposition à la lumière.

5. Procédé selon la revendication 4, **caractérisé en ce que** la lumière présente une longueur d'onde située en dehors de la plage visible.

6. Procédé selon la revendication 1, **caractérisé en ce que** l'épaisseur (t₁, t₂) de la couche d'adhésif (9) peut être modifiée lors de la création de l'élément de prothèse dentaire (3) dans la zone de la surface intérieure (5) de l'élément de prothèse dentaire (3).

7. Procédé selon l'une des revendications 1 à 6, **caractérisé en ce que** l'épaisseur de la couche d'adhésif (9) est localement différente.

8. Procédé selon l'une des revendications 1 à 7, **caractérisé en ce que** l'élément de prothèse dentaire (3) est aligné avec l'autre élément de prothèse dentaire (2) grâce à l'utilisation d'au moins une entretoise (10).

9. Procédé selon la revendication 8, **caractérisé en ce que** l'entretoise (10) fait partie intégrante de la surface intérieure (5) de l'élément de prothèse dentaire (3).

10. Procédé selon la revendication 8 ou 9, **caractérisé en ce que** l'entretoise (10) est positionnée dans la zone non visible.

11. Procédé selon l'une des revendications 1 à 10, **caractérisé en ce que**, sur l'élément de prothèse dentaire (3) se trouvent des surfaces d'adaptation (12) permettant d'orienter l'élément de prothèse dentaire (3) par rapport à l'autre élément de prothèse dentaire (2), afin de permettre un alignement précis et clair de l'élément de prothèse dentaire (3).
